# EUROPEAN PATENT SPECIFICATION

(11) **EP 2 915 367 B1**
(45) Date of publication and mention of the grant of the patent: **27.04.2016**
(21) Application number: 13795011.9
(22) Date of filing: 04.11.2013
(51) Int. Cl.: H04W 48/20, H04W 48/12, H04W 84/12

(54) **METHODS AND DEVICES REGARDING CELL RESELECTION FOR A USER EQUIPMENT**
VERFAHREN UND VORRICHTUNGEN ZUR ZELLENNEUAUSWAHL FÜR EINE BENUTZERVORRICHTUNG
PROCÉDÉS ET DISPOSITIFS CONCERNANT UNE RESÉLECTION DE CELLULE D'UN ÉQUIPEMENT D'UTILISATEUR

(30) Priority: 05.11.2012 US 201261722379 P
(43) Date of publication of application: 09.09.2015
(73) Proprietor: Telefonaktiebolaget LM Ericsson (publ), 164 83 Stockholm (SE)
(72) Inventor: PEISA, Janne, FI-02130 Espoo (FI); SCHLIWA-BERTLING, Paul, S-590 71 Ljungsbro (SE)
(74) Representative: Ericsson
(86) International application number: PCT/SE2013/051288
(87) International publication number: WO 2014/070100

(56) References cited:
- WO-A1-2008/154218
- US-A1- 2007 064 650
- US-A1- 2007 140 163
- TOSHIBA AMERICA RESEARCH ET AL: "Access Networks Discovery DISCUSSION PAPER", 3GPP DRAFT; S2-070865_COMPANION PAPER TO NW DISCOVERY CONTRI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. St. Louis, USA; 20070212 - 20070215, 7 February 2007 (2007-02-07), XP050627165, [retrieved on 2007-02-07]

## Description

### TECHNICAL FIELD

Embodiments herein relate to a method performed by a base station comprised in a cellular system, such as a telecommunications system for mobile communications, the base station, a method performed by a user equipment, and the user equipment. In particular, embodiments herein relate to cell reselection for the user equipment.

### BACKGROUND

Communication devices such as wireless devices may be also known as e.g. user equipments (UEs), mobile terminals, wireless terminals and/or mobile stations. A wireless device is enabled to communicate wirelessly in a cellular communications network, wireless communications system, or radio communications system, sometimes also referred to as a cellular radio system, cellular network, cellular communications system or simply cellular system. A typical example of such system or network, depending on terminology used, is a telecommunications system for mobile communications. The communication may be performed e.g. between two wireless devices, between a wireless device and a regular telephone and/or between a wireless device and a server via a Radio Access Network (RAN) and possibly one or more core networks, comprised within the cellular communications network. The wireless device may further be referred to as a mobile telephone, cellular telephone, laptop, Personal Digital Assistant (PDA), tablet computer, just to mention some further examples. The wireless device may be, for example, portable, pocket-storable, hand-held, computer-comprised, or vehicle-mounted mobile device, enabled to communicate voice and/or data, via the RAN, with another entity, such as another wireless device or a server.

The cellular communications network covers a geographical area which is divided into cell areas, wherein each cell area is served by at least one base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided according to a Radio Access Technology (RAT) and at a carrier frequency by the base station at a base station site. The base station may support one or several communication technologies, such as RATs. Cells may overlap so that several cells cover the same geographical area. By the base station serving a cell is meant that the radio coverage is provided such that one or more wireless devices located in the geographical area where the radio coverage is provided may be served by the base station. One base station may serve one or several cells. When one base station serves several cells, these may be served according to the same or different RATs, and/or may be served at same or different carrier frequencies. The base stations communicate over the air interface operating on radio frequencies with the wireless device within range of the base stations.

In some RANs, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Spécial Mobile). In 3rd Generation Partnership Project (3GPP) Long Term Evolution (LTE), base stations, which may be referred to as eNodeBs or eNBs, may be directly connected to other base stations and may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for wireless devices. High Speed Packet Access (HSPA) is an amalgamation of two mobile telephony protocols, High Speed Downlink Packet Access (HSDPA) and High Speed Uplink Packet Access (HSUPA), defined by 3GPP, that extends and improves the performance of existing 3rd generation mobile telecommunication network utilizing the WCDMA. Moreover, the 3GPP has undertaken to evolve further the UTRAN and GSM based radio access network technologies, for example into evolved UTRAN (E-UTRAN) used in LTE.

The expression downlink (DL) is used for the transmission path from the base station to the wireless device. The expression uplink (UL) is used for the transmission path in the opposite direction i.e. from the wireless device to the base station.

Existing 3GPP inter-RAT mobility mechanisms are based on a UE evaluating detected cells, and reselecting the best cell based on the received signal strength, e.g. Reference Signal Received Power (RSRP), or received signal quality, e.g. Reference Signal Received Quality (RSRQ). In addition the cellular system provides information on how good, e.g. in terms of RSRP and/or RSRQ, a new cell should be, e.g. with regard to a reselection threshold that may be named Thresh, for a certain period of time that may be named Treselection.

According to 3GPP Technical Specification (TS) 36.304, "Evolved Universal Terrestrial Radio Access (E-UTRA); User Equipment (UE) procedures in idle mode", version 11.0.0, section 5.2.4.5, a mechanism for reselecting to a different RAT is described as "cell reselection to a cell on a higher priority E-UTRAN frequency or inter-RAT frequency than the serving frequency shall be performed if: A cell of a higher priority RAT/ frequency fulfills Srxlev > Thresh_{X, HihP} during a time interval Treselection_{RAT}; and more than 1 second has elapsed since the UE camped on the current serving cell.".

Required information is provided in TS 36.331, "Evolved Universal Terrestrial Radio Access (E-UTRA); Radio Resource Control (RRC); Protocol specification, version 11.0.0, section 6.3.1, which contains cell reselection information common for intra-frequency, inter-frequency and/ or inter-RAT cell reselection, i.e. applicable for more than one type of cell reselection but not necessarily all. In said section, see e.g. the System Information Block (SIB) Type3 Information Element (IE) and the System Information Block Type3 field descriptions.

### SUMMARY

According to the present invention, a method performed by a base station as set forth in claim 1, a method performed by a user equipment as set forth in claim 6, a base station as set forth in claim 13 and a user equipment as set forth in claim 17. Embodiments of the invention are claimed in the dependent claims.

An object is to provide improvements with regard to cell reselection for a user equipment.

According to a first aspect there is provided a method, performed by a base station, for supporting cell reselection for a user equipment .The base station is comprised in a cellular system. The base station obtains information that comprises system information relevant for idle mode reselection including idle mode reselection to one or more WiFi cells and one or more cells of the cellular system. The base station broadcasts the system information.

According to a second aspect there is provided a method performed by user equipment, for managing cell reselection. The user equipment receives system information broadcasted from a base station comprised in a cellular system. The system information is relevant for idle mode reselection including idle mode reselection to one or more WiFi cells and one or more cells of the cellular system. The user equipment performs cell reselection based on the received system information.

According to a third aspect there is provided a base station for supporting cell reselection for a user equipment. The base station is comprised in a cellular system. The base station is configured to obtain information that comprises system information relevant for idle mode reselection including idle mode reselection to one or more WiFi cells and one or more cells of the cellular system. The base station is further configured to broadcast the system information.

According to a fourth aspect there is provided user equipment for managing cell reselection. The user equipment is configured to receive system information broadcasted from a base station comprised in a cellular system. The system information is relevant for idle mode reselection including idle mode reselection to one or more WiFi cells and one or more cells of the cellular system. The user equipment is further configured to perform cell reselection based on the received system information.

Hence, the user equipment, e.g. a smart phone, may reselect and also select to/from also WiFi cells and not only with regard to cells of the cellular system. This provides a more flexible way of connecting to and utilizing WiFi than conventionally. Also, by the information broadcasted and used by the user equipment when performing the cell reselection, embodiments herein enable that a WiFi connection may be avoided or interrupted with regard to the WiFi cell, although available for connection, when it offers a less good alternative than staying connected to or connecting to the cell of the cellular system.

US 2007/0064650 A1 is about enabling efficient handoff from a public cellular wireless network, e.g. CDMA 2000, to a WLAN. Idle more handoff, when a mobile station is not actively is communicating traffic, is performed by communicating from the network a broadcast message with WLAN identifiers to the mobile station.

WO 2008/154218 is about providing a cell information list for a non-3GPP capable wireless/transmitter unit (WTRU) operating in a 3GPP network. The cell information list comprises WLAN selection and re-selection information.

### AMENDED SHEET

Figure 1 a is a schematic block diagram depicting an example of a cellular system in relation to which the embodiments herein are explained.
Figure 2 is a combined signaling diagram and flowchart schematically illustrating an example method according to embodiments herein.
Figures 3-4 relates to an example of a System Information Block that may be used in implementation of embodiments herein.
Figure 5 is a flow chart illustrating a method, performed by a base station, according to embodiments herein.
Figure 6 is a flow chart illustrating a method, performed by a user equipment, according to embodiments herein.
Figure 7 is a schematic block diagram illustrating a base station according to embodiments herein.
Figure 8 is a schematic block diagram illustrating a user equipment according to embodiments herein.

### DETAILED DESCRIPTION

Before presenting embodiments herein and as part of the development towards embodiments herein, WiFi in the context of cell reselection and UEs that support both connection to WiFi and cellular systems, e.g. based on a 3GPP RAT as LTE, will first be discussed.

As should be recognized, WiFi refers to wireless communication based on Institute of Electrical and Electronics Engineers' (IEEE) 802.11 standards. Also as used herein, Wireless Local Area Network (WLAN) may be considered synonymous with WiFi. Moreover, in the following a "WiFi cell" means a cell around a WiFi Access Point (AP). That is, a geographical area where the WiFi AP provides radio coverage and thereby enables a user equipment located in the WiFi cell and supporting WiFi to connect to and be served by the WiFi AP and thereby be connected to a WiFi network.

Currently there is no standardized mechanism for a UE in idle mode to reselect between a WiFi cell and a cell of a 3GPP RAT such as GERAN, UTRA and E-UTRA. This leads to different UEs implementing different reselection algorithms in idle mode. The most typical algorithm connects the UE to a WiFi cell whenever there is WiFi coverage available, even though the cellular connection might be better. This leads to poor end-user experience e.g. when the WiFi cell is loaded or has poor backhaul connection. As used herein, "cellular connection" refers to connection to a cellular systems, including e.g. 3GPP RATs, i.e. system based on multiple cells and that in contrast to WiFi is configured mainly for mobile communication and be able to e.g. provide services to a UE that moves between cells. Also, a cellular system typically covers a much larger continuous area than a WiFi cell or even network of WiFi cells.

A basic concept of this disclosure, which concept will be explained in greater detail below, may be considered to provide an idle mode mobility mechanism between WiFi cells and cells of cellular systems, such as 3GPP RATs, by using defined 3GPP inter-RAT or intra-RAT idle mode mobility mechanisms. These have hitherto not involved WiFi at all.

The term "Idle mode" of a UE may herein be used in the sense that the UE is in idle mode with respect to WiFi systems and/or cellular systems, including said 3GPP RATs. With respect to a cellular system, such as based on a 3GPP RAT, idle mode is a known concept and state. For example, in idle mode a UE in a cellular system is disconnected from the cellular system but may use what may be referred to as Discontinuous Receive (DRx) to e.g. reduce battery life. DRx may be configured to monitor a downlink channel at regular intervals in order to check for signalling targeting the UE, e.g. in the form of a paging message. In case there is such signalling, e.g. indicating downlink data to be received, the UE may initiate a connection to the cellular system and enter a connected mode whereby the downlink data may be received. However, idle mode as a concept with regard to WiFi is less known. As used herein, in a WiFi system, the term "idle mode" connotes, i.e. refers to, states in which the UE is disconnected from any WiFi network. This means that the UE is neither associated nor authenticated with a WiFi cell or a network of WiFi cells.

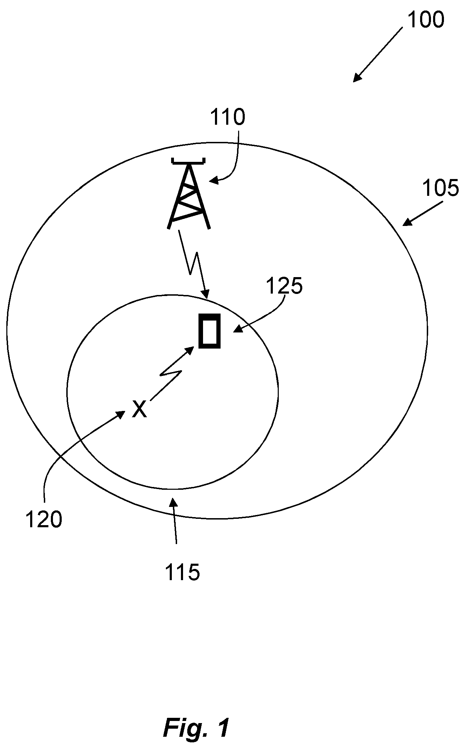

**Figure 1** is a schematic block diagram depicting an example of a cellular system 100 in relation to which the embodiments herein are explained. The cellular system 100 is in the example an LTE system comprising **a base station 110,** e.g. a eNB, and **a cell 105.** The base station 110 is located in the cell 105 and typically serves the cell 105. **A UE 125** is located in the cell 105. In the cell 105 there is also a **WiFi cell 115** with **a WiFi access point 120,** which WiFi access point 120 typically serves the WiFi cell 115. Figure 1 serves to illustrate the concept of a UE having a cell 105 of a cellular system 100 and a cell 115 of a WiFi system to choose from when re-selecting cell.

Note that embodiments described herein are applicable for e.g. GERAN, UTRA and E-UTRA, even though the nodes exemplified in Figure 1 and the example signaling used in this document is mainly based on E-UTRA and/or LTE. Thus, for example, UE is used as a generic term for e.g. a terminal or station in the cellular system, although which term is most commonly used typically vary between different cellular systems e.g. of different RATs. That is, UE, as used herein may e.g. be synonymous with and/or referred to as e.g. wireless device as also was indicated in the Background. Also, when the term "the network" or "cellular network" or "cellular system" is used herein, this term may refer to one or more of the following system components in a respective cellular system, e.g. depending on which RAT a particular cellular system is associated with:
- GERAN: BSS, comprising BTS and BSC, i.e. Base Station Subsystem, comprising Base Transceiver System and Base Station Controller. The "intelligence" for making decisions regarding policies, thresholds etc is mainly based in the BSC, and the instructions/information is broadcast to the UEs via the BTS.
- UTRA: NodeB, RNC, Radio Node Controller. The "intelligence" for making decisions regarding policies, thresholds etc is mainly based in the RNC, and the instructions/information is broadcast via the NodeB, although the NodeB may also in embodiments be equipped so that it can perform the functions of making decisions regarding policies, thresholds etc.
- E-UTRA: eNodeB or eNB.

In other words, the base station 110 in the cellular system 100 shown in Figure 1 and used in examples herein may be named eNB when the cellular system 100 is based on LTE and something different when based on another RAT, e.g. any 3GPP RAT, i.e. RAT specified by 3GPP, e.g. based on LTE. When discussing embodiments herein the more generic term base station is used in order not to confuse reader with impression that embodiments here only concern LTE. The different terms and naming, base station, eNB etc. depending on technology used was also indicated in the Background.

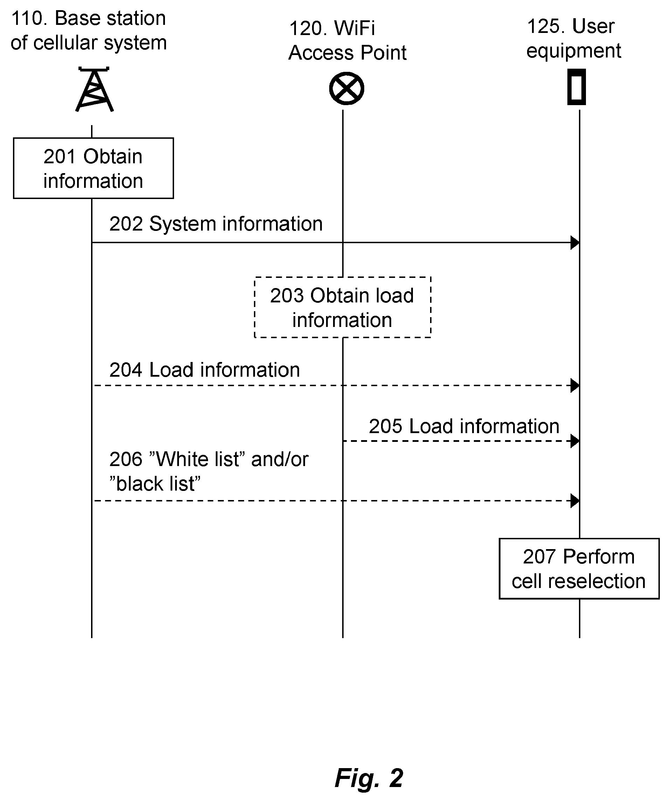

A method for supporting cell reselection for the user equipment 125, will now be described with reference to the combined signaling diagram and flowchart depicted in **Figure 2****.** The method comprises the following actions, which actions may be taken in any suitable order. Further, actions may be combined.

### Action 201

The base station 110 obtains information that comprises system information relevant for idle mode reselection including idle mode reselection to one or more WiFi cells, e.g. the WiFi cell 115, and one or more cells 105 of the cellular system 100, e.g. the cell 105 of the cellular system 100.

Part of the system information relevant for idle mode reselection to the one or more cells 105 of the cellular system may be obtained conventionally. Another part of the system information, relevant for idle mode reselection to the one or more WiFi cells, may be obtained, at least partly, by being received directly, or indirectly by the base station 110 from one or more WiFi APs serving the involved cells, e.g. the WiFi access point 120 in case of the WiFi cell 115. Indirect receipt may e.g. be via one or more intermediate nodes in the cellular system 100 and/or in another network that the one or more WiFi APs are is comprised in or connected to.

As used herein, system information relevant for idle mode reselection is understood to refer to system information that at least is relevant for the user equipment 125 to perform cell reselection when the user equipment 125 is in idle mode. Note that system information relevant to perform cell reselection when the user equipment is in idle mode may also be used for reselection, or access selection, when the user equipment 125 is in connected mode. Hence, the user equipment 125 may be in idle mode or connected mode with respect to the cellular system 100 and e.g. use the system information for reselection to the one or more WiFi cells, e.g. WiFi cell 115, when in idle mode, and/or for reselection, or access selection, to the one or more WiFi cells, e.g. WiFi cell 115, when in connected mode. Conventional reselection within and between only cellular systems, i.e. intra-Rat and inter-RAT, typically concerns user equipment only in idle mode, i.e. that are disconnected from any cellular system involved. However, in case of also WiFi cells, e.g. including the WiFi cell 115, it should be understood that reselection may as well concern user equipments that are in connected mode with respect to a cellular system, e.g. the cellular system 100. Hence, in the context of embodiments herein, it should be understood that the system information relevant for idle mode reselection may be relevant both when the user equipment 125 is in idle mode and connected mode with respect to the cellular system 100. Similarly, the user equipment may be connected or disconnected from a WiFi network when receiving the system information. As should be recognized, the user equipment 125 may e.g. be connected to a WiFi network of the WiFi cell 115, e.g. be served by the WiFi access point 120 in the WiFi cell 115, and at the same time be in idle mode or connected mode with respect to the cellular system 100.

### Action 202

The base station 110 broadcasts the system information and the UE 125 receives the broadcasted system information. It should be understood that the base station 110 broadcasts the system information in one or more cells of the cellular system, which one or more cells are served by the base station. For example, when the base station 110 serves the cell 105, the broadcast of the system information is at least in said cell 105.

The broadcast enables the user equipment 125, when located in the one or more cells to, e.g. the cell 105 as shown in Figure 1, to receive the broadcasted system information. In other words, the broadcast is being performed so that the user equipment 125 may receive the broadcasted system information. Thereby the user equipment 125 is enabled to, for cell reselection, choose between the one or more WiFi cells and the one or more cells of the cellular system 100. In other words, the user equipment 125 may choose between the one or more WiFi cells, e.g. the WiFi cell 115 and the one or more cells, e.g. the cell 105, of the cellular system 100. The user equipment thus have choice to, based on the system information, stay connected or connect to a cell, e.g. the cell 105, of a cellular system, e.g. the cellular system 100, or reselect to a WiFi cell, e.g. the WiFi cell 115, of a WiFi network, or the other way around.

The system information may be comprised in a system Information Block (SIB) that will be discussed separately below.

The system information may e.g. comprise a list of WiFi carriers, e.g. WiFi cell frequencies or identifiers associated with frequencies to enable the user equipment 125 to find and connect to the one or more WiFi cells, e.g. the WiFi cell 115. The system information may also comprise other information that may be needed for connection, such as WiFi encryption standard identifier, password needed for connection etc.

Moreover, the system information may e.g. comprise a time to trigger reselection, as should be understood, typically is represented by a value. The time to trigger reselection may be referred to by T_{reselection, WiFi} and will be further discussed separately below.

Furthermore, the system information may e.g. comprise one or more reselection thresholds, typically represented by a respective value as should be realized. Reselection thresholds and examples thereof will be further discussed below.

The user equipment 125 may receive the system information periodically.

The user equipment 125 may update a current cell reselection criteria when the user equipment 125 is not connected to a cellular network. For example, the user equipment 125 may read the broadcasted system information periodically, e.g. after a timer has expired, such as a dedicated timer for this purpose, which would be a way of implementing periodic reading of system information.

The periodical receipt of the system information may be based on the time to trigger reselection when such is comprised in the system information. Additionally or alternatively the user equipment 125 may receive the system information in response to that a WiFi connection quality of a WiFi network to which the user equipment 125 is connected has decreased below a certain threshold. As should be understood the connection to the WiFi network comprises at least connection to an AP serving a WiFi cell of the WiFi network, e.g. the WiFi access point 120 serving the WiFi cell 115. This WiFi cell may be comprised in the system information, but may alternatively be another WiFi cell. Such another WiFi cell may associated with the same WiFi network as the WiFi cell 115 or with another WiFi network. Said certain threshold may be one of said one or more reselection thresholds when such are comprised in the system information.

### Action 203

The WiFi access point 120 may obtain load information about the load in the WiFi cell 115.

A WiFi AP in general, including any conventional WiFi AP, is typically configured to manage and provide information on load in a WiFi cell or cells that the WiFi AP serves. The load information may e.g. comprise one or more of: a percentage of a maximal capacity of the WiFi cell, the maximal capacity, an available bitrate, WiFi backhaul quality, and/or cellular system load, cellular system load of a particular cell, cellular system available bitrate, cellular system available bitrate for a particular cell, cellular system backhaul quality, etc. The WiFi access point 120 may also obtain load information with regard to other of the one or more WiFi cells. In the latter case this information may be obtained directly, or indirectly by the WiFi acess point 120 from one or more other WiFi APs serving the involved WiFi cells.

### Action 204

The information obtained by the base station 110 in action 201 may further comprise load information of the one or more WiFi cells, e.g. the WiFi cell 115. The base station 110 may broadcast the load information. The user equipment 125 may receive the broadcasted load information from the base station 110.

The load information may, similarly as the part of the system information relevant for idle mode reselection to the one or more WiFi cells, be obtained by being received directly, or indirectly by the base station 110 from one or more WiFi APs serving the involved WiFi cells, including e.g. the WiFi access point 120 in case of the WiFi cell 115. Indirectly receipt may e.g. be via one or more intermediate nodes in the cellular system 100 and/or in another network that the one or more WiFi APs are is comprised in or connected to. As already mentioned, a WiFi AP in general, including any conventional WiFi AP, is typically configured to manage and provide information on load in a WiFi cell or cells that the WiFi AP serves.

### Action 205

The WiFi access point 120 may broadcast the load information obtained in action 203. That is, the WiFi access point 120 may broadcast the load information in the WiFi cell 115. The user equipment 125 may receive the broadcasted load information from the WiFi access point 120.

How the load information may be used will be discussed and exemplified below.

When the user equipment 125 receives load information broadcasted from the WiFi access point 120 it may be based on information contained in the so called HotSpot 2.0 specifications. These offer an approach to public access Wi-Fi by the Wi-Fi Alliance. The idea is that mobile devices automatically shall join a Wi-Fi subscriber service when the user enters a Hotspot 2.0 area. Reason is e.g. to provide better bandwidth and on demand service to users. Hotspot 2.0 is based on the IEEE 802.11u standard that relates to a set of protocols to enable cellular-like roaming, i.e. similar as in cellular systems. If a mobile device supports 802.11u and is subscribed to a Hotspot 2.0 service it should automatically connect and roam.

### Action 206

The information obtained by the base station 110 in action 201 may further comprise a "white list" of allowed WiFi cells and/or a "black list" of prohibited WiFi cells. The base station 110 may broadcast the "white list" and/or the "black list". The user equipment 125 may receive the broadcasted load information from the base station 110.

The respective "white list" and "black list" may also comprise additional information besides WiFi cell identifiers, e.g. a priority per WiFi cell and/or WiFi AP. For example so that in case that there are two WiFi cells to select from, a WiFi cell associated with a higher priority according to the "white list" is selected.

Respective one of the "white list" and the "black list" may e.g. be associated with a single or a group be associated of WiFi cell/s and/or WiFi AP/s, and may e.g. be the same for the group, or even for the whole cellular system 100. The "white list" and/or the "black list" may be managed by the base station 110 or a management node or similar of the cellular system and therefrom be distributed, e.g. send to base stations, including the base station 110, of the cellular system 100.

Note that the cellular system 100, e.g. the base station 110 or said management node, may use relevant information, such as current WiFi load, capacity and/or performance of WiFi backhaul, etc., to determine which WiFi cell or WiFi cells the user equipment 125 may select to. It should be realized that this may be accomplished by means of said system information and/or said "white list" and/or said "black list".

### Action 207

The user equipment 125 performs cell reselection based on the received system information.

When the user equipment 125 has received the load information in action 204 and/or action 205, it may consider the received load information for the cell reselection. For example, the load information may be used by the UE 125 in decision whether to connect or not connect to any of the one or more WiFi cells, e.g. the WiFi cell 115, and/or which WiFi cell to connect to in case of several WiFi cells. For example, the user equipment 125 may use the received load information to prioritize WiFi cells with low load. For example,
- the user equipment 125 may prioritize the WiFi cell with lowest load,
- the user equipment 125 may be provided, e.g. via the system information or by dedicated signaling from the cellular system 100 or from a WiFi access point, e.g. the WiFi access point 120, with a threshold for load. Unless a WiFi load of a WiFi cell, e.g. the WiFi cell 115, is lower than the threshold, the user equipment 125 may not select the WiFi cell.

It should be understood that low and lowest typically concern cells available for reselection by the user equipment 125 and may be with regard to all or some of said one or more WiFi cells and/or all or some of said one or more cells of the cellular system 100. The threshold for load may be comprised in said one or more reselection thresholds that may be comprised in the system information.

When the user equipment 125 has received the "white list" and/or the "black list" in action 206, the cell reselection may be further based on the received "white list" and/or "black list".

How the system information, the load information and the "white list" and/or "black list" may be used in the cell reselection will be discussed and exemplified below.

Hence, the user equipment 135, when in idle mode with regard to the cellular system 100, e.g. the cell 105, or with regard to WiFi, e.g. the WiFi cell 115, may when reselecting cell, select a cell from the cellular system 100, such as for GERAN, UTRA and E-UTRA, or select a WiFi cell. The cell selection may in turn be based on information broadcast via the cellular system 100, from the base station 110, and/or from the WiFi access point 120. The criteria and information have been discussed above and will be further exemplified below above. The decision by the user equipment 125 on which cell to reselect to, or to stay connected in a current cell, may be based on some or all of the system information, the load information and the "white list" and/or "black list". The actual decision may thus be taken by the user equipment 125 and/or by, or at least influenced by, the cellular system 100. For example, the cellular system 100 may determine or influence by means of the system information and/or the load information and/or the "white list" and/or "black list", which cell or cells, if any, the user equipment 125 may select from for re-selection. Also, note that the cellular system 100 may determine or influence which cell to perform reselection to, based on measurements by the user equipment 125, which measurements may have been forwarded by the user equipment 125 to the cellular system 100.

Also, the cellular system 100 may be arranged to broadcast all or some of information and criteria mentioned herein to UEs, e.g. the user equipment 125, for use by the UEs in idle mode cell reselection between cells of the cellular system 100 and WiFi cells. The cellular system 100 is thus arranged to gain necessary information from WiFi APs in the vicinity of a cell, e.g. he cell 105 to which a UE, e.g. the user equipment 125, is attached at the moment for receiving the broadcast. This also means that the WiFi cells, e.g. the WiFi cell 115, preferably via their APs, e.g. the WiFi access point 120, are able to transmit the necessary information to a cellular system, e.g. the cellular system 100. This is preferably accomplished via base stations, e.g. the base station 110, in the cellular system 100, which then forward the information to higher nodes in the system, such as BSCs and RNCs. However, the information may also or alternatively be transmitted from the WiFi APs to other nodes in the cellular system 100 via e.g. a landline.

In conclusion, according to embodiments herein the user equipment 125, e.g. a smart phone, may reselect to/from also WiFi cells and not only with regard to cells of the cellular system 100. Compared to the conventional case discussed above, this provides a more flexible way of connecting to and utilizing WiFi for the user equipment 100.

Moreover, by the information broadcasted to the user equipment 125 and used by the user equipment 125 when performing the cell reselection, embodiments herein enable that a WiFi connection may be avoided or interrupted with regard to the WiFi cell 115, although available for connection, when it offers a less good alternative than staying connected to or connecting to the cell 105 of the cellular system 100.

Also, since embodiments herein utilizes the cellular system 100 that is common for different type and models of UEs, an effect of implementation in the cellular system 100, e.g. in the base station 110, will be that updated versions and models of user equipments, even of different type and models, will be influenced to handle connection to WiFi in the same or at least more similar manner than conventionally. Thereby a more consistent and improved user experience with regard to WiFi s enabled for user equipments in cellular systems 100.

The system information discussed above may e.g. be broadcast in an amended existing System Information Block (SIB), or a new SIB may be created. As already mentioned in the Background, for an existing SIB as reference, see e.g. the System Information Block Type3 IE and the System Information Block Type3 field descriptions in .TS 36.331, "Evolved Universal Terrestrial Radio Access (E-UTRA); Radio Resource Control (RRC); Protocol specification, version 11.0.0, section 6.3.1. In cse of reference to TS 36.304, see as already mentioned in the Background, 3GPP TS36.304, "Evolved Universal Terrestrial Radio Access (E-UTRA); User Equipment (UE) procedures in idle mode", version 11.0.0, section 5.2.4.5.

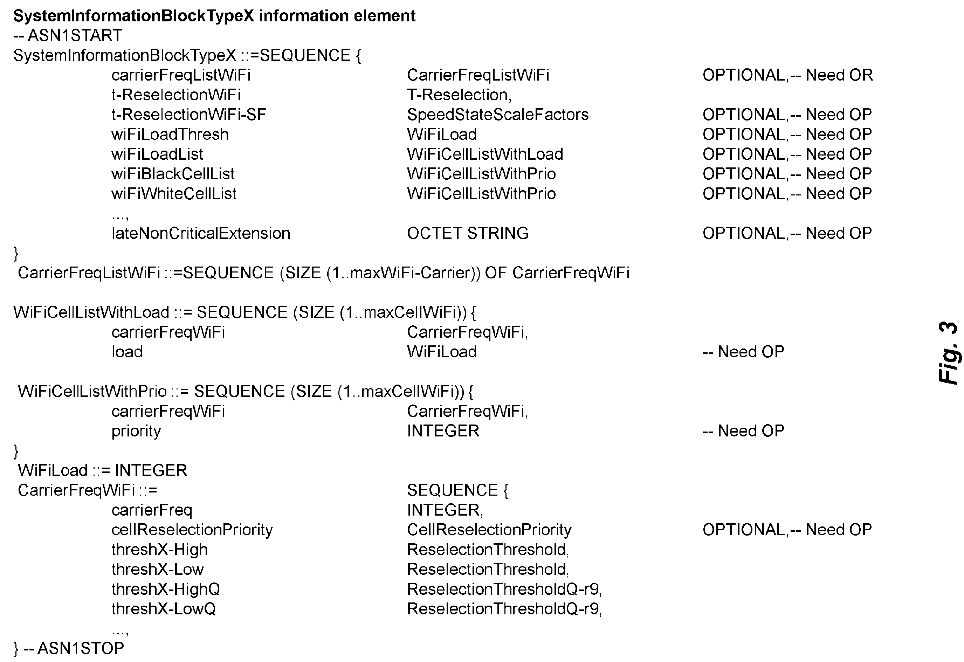

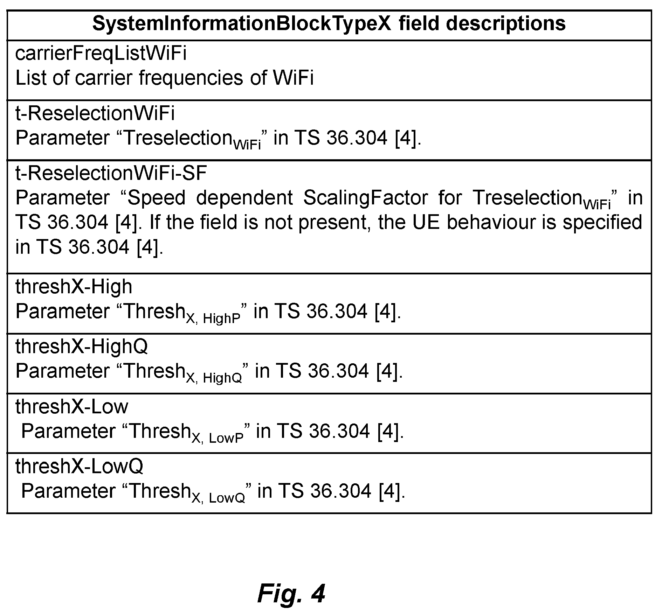

The amended existing SIB may e.g. be based on said System Information Block Type3. An example of a new SIB, herein referred to as System Information Block Type X, or simply SIB X, is shown in **Figures 3-4****.** The example is presented in a similar manner as the above-mentioned System Information Block Type3 in the existing standard specification, and thus exemplifies how a future variant or extension of a stand specification may look like. The references to "TS 36.304 [4]" has correspondence in the above-mentioned System Information Block Type3 in the existing standard specification, and is in the shown example thus only for illustrating similarities. If the example in Figure 3-4 would be used in a future standard specification, the reference to "TS 36.304 [4]" would be to a future, currently not existing, version of TS 36.304 that e.g. may have been updated with regard to WiFi interworking.

The shown example SIB, SIB X, contains, and thus exemplifies, information relevant for idle mode cell re-selection between cells, including e.g. cell 105, of the cellular system 100 and WiFi cells, e.g. WiFi cell 115. Note that cells of the cellular system 100 may herein be referred to as "3GPP cells" to distinguish them from WiFi cells that are not defined by 3GPP but by IEEE. A parameter Treselection_{RAT} specifies the cell reselection timer value for a particular RAT. For each target E-UTRA frequency and for each RAT, other than E-UTRA, a specific value for the cell reselection timer may be defined and may be applicable when evaluating reselection within E-UTRAN or towards another RAT. For example, Treselection_{RAT} for E-UTRAN is Treselection_{EUTRA}, for UTRAN is Treselection_{UTRA}, for GERAN is Treselection_{GERA}, for Treselection_{CDMA_HRPD}, and for Treselection_{CDMA_1xRTT}. Note that conventionally Treselection_{RAT} may not be comprised is the system information, but used in reselection rules by the UE for each RAT. However, Treselection_{WiFi} specifies the cell reselection timer value Treselection_{RAT} for WiFi, and is shown comprised in the SIB X example and is thus in the example comprised in the system information. Thresholds corresponding to Thresh_{X,High}, Thresh_{X,Hight}, Thresh_{X,Low}, Thresh_{X,LowQ} are presently defined in 3GPP TS36.304, "Evolved Universal Terrestrial Radio Access (E-UTRA); User Equipment (UE) procedures in idle mode", version 11.0.0, section 5.2.4.7. Future versions may be updated with WiFi specific parts.

In view of the above, a more detailed example of reselection from LTE to WiFi will now follow.

In the example, idle mode cell reselection to a cell on a higher priority WiFi frequency shall be performed, e.g. by the user equipment 125, if:
- A cell of a higher priority WiFi frequency fulfils Srxlev > Thresh_{X,HighP} during a time interval Treselection_{WiFi}; and
- A current load of the WiFi cell is greater than a load threshold WiFiLoadThresh; and
- The WiFi cell is not listed in a WiFi cell "black list", or the WiFi cell is listed in a WiFi cell "white list"; and
- More than a certain period of time, e.g., 1 second has elapsed since the UE camped on the current serving cell.

Further, in the example, if Thresh_{Serving,LowQ} is provided in the SIB, cell reselection to a cell on a lower priority WiFi frequency shall be performed if:
- The serving cell fulfils Squal < Thresh_{Serving,LowQ} and a cell of a lower priority WiFi frequency fulfils Srxlev > Thresh_{X,LowP} during a time interval Treselection_{WiFi}; and
- More than a certain period of time, e.g., 1 second has elapsed since the UE camped on the current serving cell.
Moreover, otherwise in the example, cell reselection to a cell on a lower priority WiFi frequency shall be performed if:
- The serving cell fulfils Srxlev < Thresh_{Serving,LowP} and a cell of a lower priority WiFi frequency fulfils Srxlev > Thresh_{X,LowP} during a time interval Treselection_{RAT}; and
- More than a certain period of time, e.g., 1 second has elapsed since the UE camped on the current serving cell.

For WiFi, Srxlev is equal to Received Signal Strength Indication (RSSI) or Received Channel Power Indicator (RCPI).

In all the above criteria the value of Treselection_{WiFi} may be scaled when the UE is in the medium or high mobility state as e.g. defined in subclause 5.2.4.3.1 of the 3GPP TS36.304, "Evolved Universal Terrestrial Radio Access (E-UTRA); User Equipment (UE) procedures in idle mode", version 11.0.0.

In the example, if more than one WiFi cell meets the above criteria, the UE, e.g. user equipment 125, shall reselect a cell as follows:
- If load information for the WiFi cells is available and the highest-priority frequency is from WiFi, a cell with lowest WiFi load meeting the criteria of WiFi; or
- If load information for the WiFi cells is not available and the highest-priority frequency is from WiFi, a cell ranked as the best cell among the cells on the highest priority frequency(ies) meeting a criteria of WiFi.

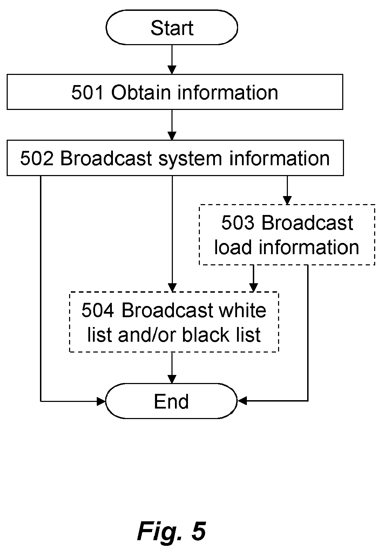

Embodiments herein relating to a method performed by the base station 110, for supporting cell reselection for the user equipment 125, will now be further elaborated and described with reference to the flowchart depicted in **Figure 5****.** The base station 110 is comprised in the cellular system 100. Note that the user equipment 125 may be in idle mode or connected mode with respect to the cellular system 100.

The following actions may be performed in any suitable order.

### Action 501

The base station 110 obtains information that comprises system information relevant for idle mode reselection including idle mode reselection to one or more WiFi cells, e.g. the WiFi cell 115, and one or more cells, e.g. the cell 105, of the cellular system 100.

The system information may comprise one or more of the following: a list of WiFi carriers, time to trigger reselection, and one or more reselection thresholds.

In some embodiments, the obtained information further comprises load information of the one or more WiFi cells, e.g. the WiFi cell 115.

Moreover, in some embodiments, the obtained information further comprises a "white list" of allowed WiFi cells and/or a "black list" of prohibited WiFi cells.

This action may fully or partly correspond to Action 201.

### Action 502

The base station 110 broadcasts the system information.

This action may fully or partly correspond to Action 202.

### Action 503

The base station 110 may further broadcast the load information when such was obtained in Action 501.

This action may fully or partly correspond to Action 204.

### Action 504

The base station 110 may further broadcast the "white list" and/or the "black list" when such was obtained in Action 501.

This action may fully or partly correspond to Action 206.

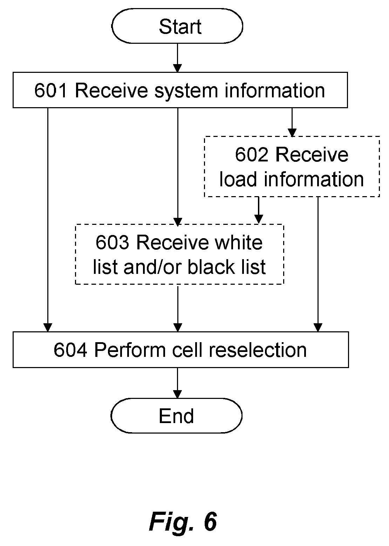

Embodiments herein relating to a method performed by the user equipment 125, for managing cell reselection, will now be further elaborated and described with reference to the flowchart depicted in **Figure 6****.** Note that the user equipment 125 may be in idle mode or connected mode with respect to the cellular system 100.

The following actions may be performed in any suitable order.

### Action 601

The user equipment 125 receives system information broadcasted from a base station, e.g. the base station 110, comprised in the cellular system 100. The system information is relevant for idle mode reselection including idle mode reselection to one or more WiFi cells, e.g. the WiFi cell 115, and one or more cells, e.g. the cell 105, of the cellular system 100.

The system information may comprise one or more of the following: a list of WiFi carriers, time to trigger reselection, and one or more reselection thresholds.

In some embodiments, the user equipment 125 receives the system information periodically and/or in response to that a WiFi connection quality of a WiFi network to which the user equipment 125 is connected has decreased below a certain threshold.

This action may fully or partly correspond to Action 202.

### Action 602

The user equipment 125 may receive load information of the one or more WiFi cells, which load information was broadcasted from the base station 110 and/or from a WiFi Access Point, "AP", wherein the user equipment for the cell reselection considers the received load information.

This action may fully or partly correspond to Action 204 and/or 205.

### Action 603

The user equipment 125 receives a "white list" comprising allowed WiFi cells and/or a "black list" comprising prohibited WiFi cells, which "white list" and/or "black list" are broadcasted by the cellular system 100.

This action may fully or partly correspond to Action 206.

### Action 604

The user equipment 125 performs cell reselection based on the received system information.

In some embodiments, the user equipment 125 considers, for the cell reselection, the load information, when such was received in Action 602.

In some embodiment, the user equipment 125 uses the received load information to prioritize WiFi cells with low load.

In some embodiments, the cell reselection is further based on the "white list" and/or "black list", when such was received in Action 603.

This action may fully or partly correspond to Action 207.

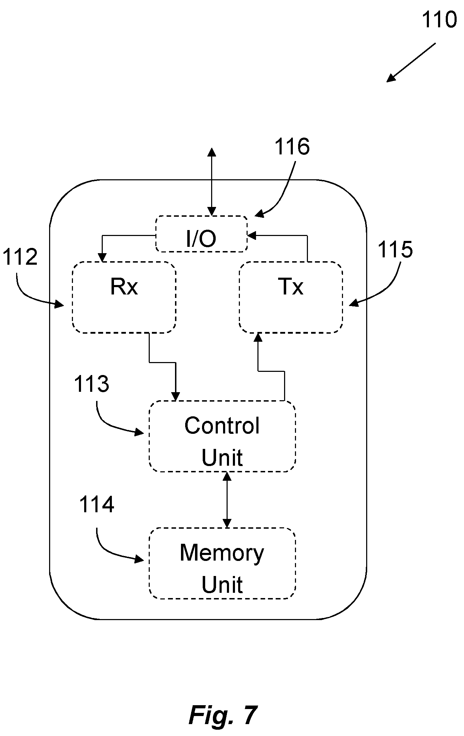

To perform the actions 501-504 above for supporting cell reselection for the user equipment 125, the base station 110 may comprise an arrangement schematically depicted in **Figure 7****.** The shown blocks corresponds to such of a generic base station, e.g. eNodeB in case of LTE, BTS in case of GERAN or a NodeB of case of UTRA. The base station 110 comprises **an I/O-unit 116** for wireless communication, including connection, to UEs, e.g. the user equipment 125, and also to higher nodes in the cellular system 100, wirelessly or by means of landlines. The base station 110 also comprises a **receive unit (Rx) 112** and a **transmit unit (Tx) 115.** The function of the base station 110 may be mainly controlled by **a control unit 113,** suitably with the aid of **a memory unit 114.** In addition to the control unit 113 the base station 110 may to some extent be controlled by higher nodes in the cellular system 100 e.g. a BSC in a GERAN system or an RNC of an UTRA system.

Hence, the base station 110, e.g. by means of the Rx 112, the I/O unit 116 and the control unit 113, is configured to obtain information that comprises the system information relevant for idle mode reselection including idle mode reselection to the one or more WiFi cells and the one or more cells of the cellular system 100.

The base station 110, e.g. by means of the control unit 113, the I/O unit 116 and the Tx 115, is further configured to broadcast the system information. When the obtained information further comprises load information of the one or more WiFi cells, the base station 110 may, e.g. by corresponding means, be further configured to broadcast also the load information. Also, when the obtained information further comprises the "white list" of allowed WiFi cells and/or the "black list" of prohibited WiFi cells, the base station 110 may, e.g. by corresponding means, be configured to broadcast the "white list" and/or the "black list".

The person skilled in the art will recognize that the various units described above may be implemented by one or more of: a processor or a micro processor and adequate software, e.g. for performing the functions and actions of embodiments herein relating to the base station 110 when executed in the processor, suitable storage therefore, a Programmable Logic Device (PLD) or other electronic component(s). Also, it is to be understood that the choice of interacting units or modules, as well as the naming of the units are only for exemplifying purpose, and nodes suitable to execute the method may be configured in a plurality of alternative ways in order to be able to execute the method.

The software may be in the form computer program code that thus ccomprises software instructions that are configured, when executed in the processor or micro processor unit, to perform the method. The computer program code may be provided as a computer program product, for instance in the form of a data carrier carrying computer program code for performing the embodiments herein when being loaded into the in the base station 110. One such carrier may be in the form of a CD or DVD. It is however feasible with other data carriers such as a memory stick, memory card or hard drive. The computer program code may furthermore be provided as pure program code on a server for download to the base station 110. The computer program code may furthermore be provided in the form of a data file or files on, or available through, a server for download. The file or files may be executable files for direct or indirect download to and execution on the base station 110, or may be for intermediate download and compilation to make them executable before download to and for execution in the base station 110. The server may be accessible over a computer network, such as the Internet, and may e.g. be a web or ftp server.

As should be realized the memory unit 114 may comprise one or more subunits of memory. The memory unit 114 may be arranged to store data, such as configurations and/or applications and/or the computer program code to perform the method when being executed in the base station 110.

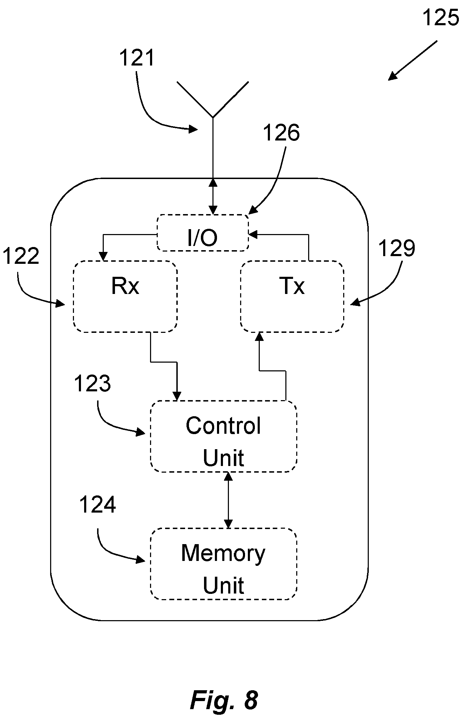

To perform the actions 601-604 in the method above for managing cell reselection, the user equipment 125 may comprise an arrangement schematically depicted in **Figure 8****.** The user equipment 125 may comprise **an antenna unit 121, an I/O-unit 126, a receive unit (Rx) 122** and **a transmit unit (Tx) 129.** The function of the user equipment 125 may be mainly controlled by **a control unit 123,** suitably with the aid of **a memory**

### unit 124.

Hence, the user equipment 125, e.g. by means of the antenna unit 121, the Rx 122, the I/O unit 126 and the control unit 123, is configured to receive the system information broadcasted from the base station 110. Moreover, the user equipment 125, e.g. by means of the control unit 123, the I/O unit 126, the Tx 129 and the antenna unit 121, is further configured to perform the cell reselection based on the received system information. In some embodiments, the user equipment 125 is configured to receive the system information periodically and/or in response to that said WiFi connection quality of a WiFi network to which the user equipment 125 is connected has decreased below a certain threshold.

Moreover, in some embodiments, the user equipment 125, e.g. by means of the antenna unit 121, the Rx 122, the I/O unit 126 and the control unit 123, is further configured to receive the load information of the one or more WiFi cells, which load information was broadcasted from the base station 110 and/or from the WiFi Access Point 120. The user equipment 125 may then, e.g. by means of the control unit 123, for the cell reselection be configured to consider the received load information. The user equipment 125 may e.g. be configured to use the received load information to prioritize WiFi cells with low load.

Furthermore, in some embodiments, the user equipment 125, e.g. by means of the antenna unit 121, the Rx 122, the I/O unit 126 and the control unit 123, is further configured to receive the "white list" comprising allowed WiFi cells and/or a "black list" comprising prohibited WiFi cells. The user equipment 125, e.g. by means of the control unit 123, may be further configured to perform the cell reselection based on the received "white list" and/or "black list".

The person skilled in the art will recognize that the various units described above may be implemented by one or more of: a processor or a micro processor and adequate software, e.g. for performing the functions and actions of embodiments herein relating to the user equipment 125 when executed in the processor, suitable storage therefore, a Programmable Logic Device (PLD) or other electronic component(s). Also, it is to be understood that the choice of interacting units or modules, as well as the naming of the units are only for exemplifying purpose, and nodes suitable to execute the method may be configured in a plurality of alternative ways in order to be able to execute the method.

The software may be in the form computer program code that thus comprises software instructions that are configured, when executed in the processor or micro processor unit, to perform the method. The computer program code may be provided as a computer program product, for instance in the form of a data carrier carrying computer program code for performing the embodiments herein when being loaded into the in the user equipment 125. One such carrier may be in the form of a CD or DVD. It is however feasible with other data carriers such as a memory stick, memory card or hard drive. The computer program code may furthermore be provided as pure program code on a server for download to the user equipment 125. The computer program code may furthermore be provided in the form of a data file or files on, or available through, a server for download. The file or files may be executable files for direct or indirect download to and execution on the user equipment 125, or may be for intermediate download and compilation to make them executable before download to and for execution in the user equipment 125. The server may be accessible over a computer network, such as the Internet, and may e.g. be a web or ftp server.

As should be realized the memory unit 124 may comprise one or more subunits of memory. The memory unit 124 may be arranged to store data, such as configurations and/or applications and/or the computer program code to perform the method when being executed in the user equipment 125.

Those skilled in the art will also appreciate that the above-mentioned units etc. may refer to a combination of analog and digital circuits, and/or one or more processors configured with software and/or firmware (e.g., stored in memory) that, when executed by the one or more processors such as the above-mentioned processor, perform as described above. One or more of these processors, as well as the other digital hardware, may be included in a single application-specific integrated circuit (ASIC) a field-programmable gate array (FPGA) or the like, or several processors and various digital hardware may be distributed among several separate components, whether individually packaged or assembled into a system-on-a-chip (SoC).

As used herein, the term "memory" may refer to a hard disk, a magnetic storage medium, a portable computer diskette or disc, flash memory, random access memory (RAM) or the like. Furthermore, the memory may be an internal register memory of a processor.

As used herein, the expression "configured to" may mean that a processing circuit is configured to, or adapted to, by means of software or hardware configuration, perform one or more of the actions described herein.

As used herein, the terms "number", "value" may be any kind of digit, such as binary, real, imaginary or rational number or the like. Moreover, "number", "value" may be one or more characters, such as a letter or a string of letters. "number", "value" may also be represented by a bit string.

As used herein, the expression "in some embodiments" has been used to indicate that the features of the embodiment described may be combined with any other embodiment disclosed herein.

When using the word "comprise" or "comprising" it shall be interpreted as non-limiting, i.e. meaning "consist at least of".

Even though embodiments of the various aspects have been described, many different alterations, modifications and the like thereof will become apparent for those skilled in the art. The described embodiments are therefore not intended to limit the scope of the present disclosure.

## Claims

1. A method, performed by a base station (110), for supporting cell reselection for a user equipment (125), said base station (110) being comprised in a cellular system (100), wherein the method comprises:
- obtaining (201, 501) information that comprises system information relevant for idle mode reselection including idle mode reselection to one or more WiFi cells (115) and one or more cells (105) of the cellular system (100), and
- broadcasting (202, 502) the system information,
**characterized in that** the system information comprises a time to trigger reselection.

2. The method as claims in claim 1, wherein the user equipment (125) is in idle mode or connected mode with respect to the cellular system (100).

3. The method as claimed in any one of claims 1-2, wherein the system information comprises one or more of the following:
a list of WiFi carriers, and one or more reselection thresholds.

4. The method as claimed in any one of claims 1-3, wherein the obtained information further comprises load information of the one or more WiFi cells (115), and the method further comprises:
- broadcasting (204, 503) the load information.

5. The method as claimed in any one of claims 1-4, wherein the obtained information further comprises a "white list" of allowed WiFi cells and/or a "black list" of prohibited WiFi cells and the method further comprises:
- broadcasting (206, 504) the "white list" and/or the "black list".

6. A method performed by user equipment (125), for managing cell reselection, wherein the method comprises:
- receiving (202, 601) system information broadcasted from a base station (110) comprised in a cellular system (100), which system information is relevant for idle mode reselection including idle mode reselection to one or more WiFi cells (115) and one or more cells (105) of the cellular system (100), and
- performing (207, 404) cell reselection based on the received system information, **characterized in that** the system information comprises a time to trigger reselection.

7. The method as claimed in claim 6, wherein the user equipment (125) is in idle mode or connected mode with respect to the cellular system (100).

8. The method as claimed in any one of claims 6-7, wherein the system information comprises one or more of the following:
a list of WiFi carriers, and
one or more reselection thresholds.

9. The method as claimed in any one of claims 6-8, wherein the user equipment (125) receives the system information periodically and/or in response to that a WiFi connection quality of a WiFi network to which the user equipment (125) is connected has decreased below a certain threshold.

10. The method as claimed in any one of claims 6-9, wherein the method further comprises:
- receiving (204, 205, 602) load information of the one or more WiFi cells, which load information was broadcasted from the base station (110) and/or from a WiFi Access Point, "AP", (120) wherein the user equipment (125) for the cell reselection considers the received load information.

11. The method as claimed in claim 10, wherein the user equipment (125) uses the received load information to prioritize WiFi cells with low load.

12. The method as claimed in any one of claims 6-11, wherein the method further comprises:
- receiving (206,603) a "white list" comprising allowed WiFi cells and/or a "black list" comprising prohibited WiFi cells, which "white list" and/or "black list" are broadcasted by the cellular system (100), wherein the cell reselection is further based on the received "white list" and/or "black list".

13. A base station (110) for supporting cell reselection for a user equipment (125), said base station (110) being comprised in a cellular system (100), wherein the base station is configured to obtain information that comprises system information relevant for idle mode reselection including idle mode reselection to one or more WiFi cells (115) and one or more cells (105) of the cellular system (100), and the base station (110) is further configured to broadcast the system information, **characterized in that** the system information comprises a time to trigger reselection.

14. The base station (110) as claimed in claim 13, wherein the system information comprises one or more of the following:
a list of WiFi carriers, and
one or more reselection thresholds.

15. The base station (110) as claimed in claim 13-14, wherein the obtained information further comprises load information of the one or more WiFi cells (115), and the base station (110) is further configured to broadcast the load information.

16. The base station (110) as claimed in any one of claims 13-16, wherein the obtained information further comprises a "white list" of allowed WiFi cells and/or a "black list" of prohibited WiFi cells and the base station (110) is further configured to broadcast the "white list" and/or the "black list".

17. A user equipment (125) for managing cell reselection, wherein the user equipment (125) is configured to receive system information broadcasted from a base station (110) comprised in a cellular system (100), which system information is relevant for idle mode reselection including idle mode reselection to one or more WiFi cells (115) and one or more cells (105) of the cellular system (100), and the user equipment (125) is further configured to perform cell reselection based on the received system information, **characterized in that** the system information comprises a time to trigger reselection.

18. The user equipment (125) as claimed in claim 17, wherein the system information comprises one or more of the following:
a list of WiFi carriers, and
one or more reselection thresholds.

19. The user equipment (125) as claimed in any one of claims 17-18, wherein the user equipment (125) is configured to receive the system information periodically and/or in response to that a WiFi connection quality of a WiFi network to which the user equipment (125) is connected has decreased below a certain threshold.

20. The user equipment (125) as claimed in any one of claims 17-19, wherein the user equipment (125) is further configured to receive load information of the one or more WiFi cells, which load information was broadcasted from the base station (110) and/or from a WiFi Access Point, "AP", (120), wherein the user equipment (125) for the cell reselection is configured to consider the received load information.

21. The user equipment (125)as claimed in any one of claims 17-20, wherein the user equipment (125) is further configured to receive a "white list" comprising allowed WiFi cells and/or a "black list" comprising prohibited WiFi cells, which "white list" and/or "black list" are broadcasted by the cellular system (100), wherein the user equipment (125) is further configured to perform the cell reselection based on the received "white list" and/or "black list".

## Patentansprüche

1. Verfahren, das von einer Basisstation (110) durchgeführt wird, zur Unterstützung von Zellneuauswahl für eine Benutzereinrichtung (125), wobei die Basisstation (110) in einem zellularen System (100) enthalten ist, wobei das Verfahren umfasst:
- Einholen (201, 501) von Informationen, die Systeminformationen umfassen, die für Bereitschaftsmodus-Neuauswahl relevant sind, welche Bereitschaftsmodus-Neuauswahl für eine oder mehrere WiFi-Zellen (115) und eine oder mehrere Zellen (105) des zellularen Systems (100) umfasst, und
- Senden (202, 502) der Systeminformationen per Broadcast,
**dadurch gekennzeichnet, dass** die Systeminformationen eine Zeit zum Auslösen von Neuauswahl umfassen.

2. Verfahren nach Anspruch 1, wobei die Benutzereinrichtung (125) in Bezug auf das zellulare System (100) in einem Bereitschaftsmodus oder angeschlossenen Modus ist.

3. Verfahren nach einem der Ansprüche 1 bis 2, wobei die Systeminformationen eines oder mehreres von Folgendem umfassen:
einer Liste von WiFi-Trägern,
und einer oder mehreren Neuauswahlschwellen.

4. Verfahren nach einem der Ansprüche 1 bis 3, wobei die eingeholten Informationen ferner Lastinformationen der einen oder der mehreren WiFi-Zellen (115) umfassen, und das Verfahren ferner umfasst:
- Senden (204, 503) der Lastinformation per Broadcast.

5. Verfahren nach einem der Ansprüche 1 bis 4, wobei die eingeholten Informationen ferner eine "Weiße Liste" von zugelassenen WiFi-Zellen und/oder eine "Schwarze Liste" von verbotenen WiFi-Zellen umfassen, und das Verfahren ferner umfasst:
- Senden (206, 504) der "Weißen Liste" und/oder der "Schwarzen Liste" per Broadcast.

6. Verfahren, das von einer Benutzereinrichtung (125) durchgeführt wird, zur Steuerung von Zellneuauswahl, wobei das Verfahren umfasst:
- Empfangen (202, 601) von Systeminformationen, die von einer Basisstation (110) per Broadcast gesendet werden, wobei die Systeminformationen für Bereitschaftsmodus-Neuauswahl relevant sind, welche Bereitschaftsmodus-Neuauswahl für eine oder mehrere WiFi-Zellen (115) und eine oder mehrere Zellen (105) des zellularen Systems (100) umfasst, und
- Durchführen (207, 404) von Zellneuauswahl basierend auf den empfangenen Systeminformationen,
**dadurch gekennzeichnet, dass** die Systeminformationen eine Zeit zum Auslösen von Neuauswahl umfassen.

7. Verfahren nach Anspruch 6, wobei die Benutzereinrichtung (125) in Bezug auf das zellulare System (100) in einem Bereitschaftsmodus oder angeschlossenen Modus ist.

8. Verfahren nach einem der Ansprüche 6 bis 7, wobei die Systeminformationen eines oder mehreres von Folgendem umfassen:
einer Liste von WiFi-Trägern, und
und einer oder mehreren Neuauswahlschwellen.

9. Verfahren nach einem der Ansprüche 6 bis 8, wobei die Benutzereinrichtung (125) die Systeminformationen periodisch und/oder in Reaktion darauf empfängt, dass eine WiFi-Verbindungsqualität eines WiFi-Netzes, mit welchem die Benutzereinrichtung (125) verbunden ist, unter eine bestimmte Schwelle abgefallen ist.

10. Verfahren nach einem der Ansprüche 6 bis 9, wobei das Verfahren ferner umfasst:
- Empfangen (204, 205, 602) von Lastinformationen der einen oder der mehreren WiFi-Zellen, wobei die Lastinformationen von der Basisstation (110) und von einem WiFi-Zugangspunkt, "AP", (120) per Broadcast gesendet wurden, wobei die Benutzereinrichtung (125) die empfangenen Lastinformationen für die Zellneuauswahl berücksichtigt.

11. Verfahren nach Anspruch 10, wobei die Benutzereinrichtung (125) die empfangenen Lastinformationen zum Priorisieren von WiFi-Zellen mit niedriger Last verwendet.

12. Verfahren nach einem der Ansprüche 6 bis 11, wobei das Verfahren ferner umfasst:
- Empfangen (206, 603) einer "Weißen Liste", welche zugelassene WiFi-Zellen umfasst, und/oder einer "Schwarzen Liste", welche verbotene WiFi-Zellen umfasst, wobei die "Weiße Liste" und/oder die "Schwarze Liste" vom zellularen System (100) per Broadcast gesendet werden, wobei die Zellneuauswahl ferner auf der empfangenen "Weißen Liste" und/oder "Schwarzen Liste" basiert.

13. Basisstation (110) zum Unterstützen von Zellneuauswahl für eine Benutzereinrichtung (125), wobei die Basisstation (110) in einem zellularen System (100) enthalten ist, wobei die Basisstation so konfiguriert ist, dass sie Informationen einholt, die Systeminformationen umfassen, die für Bereitschaftsmodus-Neuauswahl relevant sind, welche Bereitschaftsmodus-Neuauswahl für eine oder mehrere WiFi-Zellen (115) und eine oder mehrere Zellen (105) des zellularen Systems (100) umfasst, und die Basisstation (110) ferner so konfiguriert ist, dass sie die Systeminformationen per Broadcast sendet, **dadurch gekennzeichnet, dass** die Systeminformationen eine Zeit zum Auslösen von Zellneuauswahl umfassen.

14. Basisstation (110) nach Anspruch 13, wobei die Systeminformationen eines oder mehreres von Folgendem umfassen:
einer Liste von WiFi-Trägern, und
und einer oder mehreren Neuauswahlschwellen.

15. Basisstation (110) nach Anspruch 13 bis 14 wobei die eingeholten Informationen ferner Lastinformationen der einen oder der mehreren WiFi-Zellen (115) umfassen, und die Basisstation (110) ferner so konfiguriert ist, dass sie die Lastinformationen per Broadcast sendet.

16. Basisstation (110) nach einem der Ansprüche 13 bis 16, wobei die eingeholten Informationen ferner eine "Weiße Liste" von zugelassenen WiFi-Zellen und/oder eine "Schwarze Liste" von verbotenen WiFi-Zellen umfassen, und die Basisstation (110) ferner so konfiguriert ist, dass sie die "Weiße Liste" und/oder die "Schwarze Liste" per Broadcast sendet.

17. Benutzereinrichtung (125) zum Steuern von Zellneuauswahl, wobei die Benutzereinrichtung (125) so konfiguriert ist, dass sie Systeminformationen von einer Basisstation (110) empfängt, die in einem zellularen System (100) enthalten ist, wobei die Systeminformationen für Bereitschaftsmodus-Neuauswahl relevant sind, welche Bereitschaftsmodus-Neuauswahl für eine oder mehrere WiFi-Zellen (115) und eine oder mehrere Zellen (105) des zellularen Systems (100) umfasst, und die Benutzereinrichtung (125) ferner so konfiguriert ist, dass sie Zellneuauswahl basierend auf den empfangenen Systeminformationen durchführt, **dadurch gekennzeichnet, dass** die Systeminformationen eine Zeit zum Auslösen von Zellneuauswahl umfassen.

18. Benutzereinrichtung (125) nach Anspruch 17, wobei die Systeminformationen eines oder mehreres von Folgendem umfassen:
einer Liste von WiFi-Trägern, und
und einer oder mehreren Neuauswahlschwellen.

19. Benutzereinrichtung (125) nach einem der Ansprüche 17 bis 18, wobei die Benutzereinrichtung (125) so konfiguriert ist, dass sie die Systeminformationen periodisch und/oder in Reaktion darauf empfängt, dass eine WiFi-Verbindungsqualität eines WiFi-Netzes, mit welchem die Benutzereinrichtung (125) verbunden ist, unter eine bestimmte Schwelle abgefallen ist.

20. Benutzereinrichtung (125) nach einem der Ansprüche 17 bis 19, wobei die Benutzereinrichtung (125) ferner so konfiguriert ist, dass sie Lastinformationen der einen oder der mehreren WiFi-Zellen empfängt, wobei die Lastinformationen von der Basisstation (110) und von einem WiFi-Zugangspunkt, "AP", (120) per Broadcast gesendet wurden, wobei die Benutzereinrichtung (125) so konfiguriert ist, das sie die empfangenen Lastinformationen für die Zellneuauswahl berücksichtigt.

21. Benutzereinrichtung (125) nach einem der Ansprüche 17 bis 20, wobei die Benutzereinrichtung (125) ferner so konfiguriert ist, dass sie eine "Weißen Liste", welche zugelassene WiFi-Zellen umfasst, und/oder eine "Schwarzen Liste", welche verbotene WiFi-Zellen umfasst, empfängt, wobei die "Weiße Liste" und/oder die "Schwarze Liste" vom zellularen System (100) per Broadcast gesendet werden, wobei die Benutzereinrichtung (125) ferner so konfiguriert ist, dass sie Zellneuauswahl basierend auf der empfangenen "Weißen Liste" und/oder "Schwarzen Liste" durchführt.

## Revendications

1. Procédé, effectué par une station de base (110), destiné à prendre en charge une resélection de cellule pour un équipement d'utilisateur (125), ladite station de base (110) étant comprise dans un système cellulaire (100), dans lequel le procédé comprend :
- l'obtention (201, 501) d'informations comprenant des informations de système relatives à une resélection de mode de veille comprenant une resélection de mode de veille pour une ou plusieurs cellules Wifi (115) et une ou plusieurs cellules (105) du système cellulaire (100), et
- la diffusion (202, 502) des informations de système,
**caractérisé en ce que** les informations de système comprennent un temps de déclenchement de resélection.

2. Procédé selon la revendication 1, dans lequel l'équipement d'utilisateur (125) est mode de veille ou en mode connecté en ce qui concerne le système cellulaire (100).

3. Procédé selon l'une quelconque des revendications 1 et 2, dans lequel les informations de système comprennent un ou plusieurs de :
une liste de porteuses Wifi, et
un ou plusieurs seuils de resélection.

4. Procédé selon l'une quelconque des revendications 1 à 3, dans lequel les informations obtenues comprennent en outre des informations de charge de l'une ou plusieurs cellules Wifi (115), et le procédé comprend en outre :
- la diffusion (204, 503) des informations de charge.

5. Procédé selon l'une quelconque des revendications 1 à 4, dans lequel les informations obtenues comprennent en outre une « liste blanche » de cellules Wifi autorisées et/ou une « liste noire » de cellules Wifi interdites et le procédé comprend en outre :
- la diffusion (206, 504) de la « liste blanche » et/ou de la « liste noire ».

6. Procédé effectué par un équipement d'utilisateur (125), destiné à gérer une resélection de cellule, dans lequel le procédé comprend :
- la réception (202, 601) d'informations de système diffusées à partir d'une station de base (110) comprise dans un système cellulaire (100), lesdites informations de système étant relatives à une resélection de mode de veille comprenant une resélection de mode de veille pour une ou plusieurs cellules Wifi (115) et une ou plusieurs cellules (105) du système cellulaire (100), et
- l'exécution (207, 404) d'une resélection de cellule sur la base des informations de système reçues,
**caractérisé en ce que** les informations de système comprennent un temps de déclenchement de resélection.

7. Procédé selon la revendication 6, dans lequel l'équipement d'utilisateur (125) est en mode de veille ou en mode connecté en ce qui concerne le système cellulaire (100).

8. Procédé selon l'une quelconque des revendications 6 et 7, dans lequel les informations de système comprennent un ou plusieurs de :
une liste de porteuses Wifi, et
un ou plusieurs seuils de resélection.

9. Procédé selon l'une quelconque des revendications 6 à 8, dans lequel l'équipement d'utilisateur (125) reçoit les informations de système périodiquement et/ou en réponse au fait qu'une qualité de connexion Wifi d'un réseau Wifi auquel l'équipement d'utilisateur (125) est connecté a diminué au-dessous d'un certain seuil.

10. Procédé selon l'une quelconque des revendications 6 à 9, dans lequel le procédé comprend en outre :
- la réception (204, 205, 602) d'informations de charge de l'une ou plusieurs cellules Wifi, lesdites informations de charge étant diffusées à partir de la station de base (110) et/ou à partir d'un point d'accès, AP, Wifi (120), dans lequel l'équipement d'utilisateur (125) pour la resélection de cellule tient compte des informations de charge reçues.

11. Procédé selon la revendication 10, dans lequel l'équipement d'utilisateur (125) utilise les informations de charge reçues pour donner la priorité aux cellules Wifi ayant une faible charge.

12. Procédé selon l'une quelconque des revendications 6 à 11, dans lequel le procédé comprend en outre :
- la réception (206, 603) d'une « liste blanche » comprenant des cellules Wifi autorisées et/ou une « liste noire » comprenant des cellules Wifi interdites, la « liste blanche » et/ou la « liste noire » étant diffusées par le système cellulaire (100), dans lequel la resélection de cellule est en outre basée sur la « liste blanche » et/ou la « liste noire » reçues.

13. Station de base (110) destinée à prendre en charge une resélection de cellule pour un équipement d'utilisateur (125), ladite station de base (110) étant comprise dans un système cellulaire (100), dans laquelle la station de base est configurée pour effectuer l'obtention d'informations comprenant des informations de système relatives à une resélection de mode de veille comprenant une resélection de mode de veille pour une ou plusieurs cellules Wifi (115) et une ou plusieurs cellules (105) du système cellulaire (100), et la station de base (110) est en outre configurée pour effectuer la diffusion des informations de système, **caractérisée en ce que** les informations de système comprennent un temps de déclenchement de resélection.

14. Station de base (110) selon la revendication 13, dans laquelle les informations de système comprennent un ou plusieurs de :
une liste de porteuses Wifi, et
un ou plusieurs seuils de resélection.

15. Station de base (110) selon l'une quelconque des revendications 13 et 14, dans laquelle les informations obtenues comprennent en outre des informations de charge de l'une ou plusieurs cellules Wifi (115), et la station de base (110) est en outre configurée pour effectuer la diffusion des informations de charge.

16. Station de base (110) selon l'une quelconque des revendications 13 à 16, dans laquelle les informations obtenues comprennent en outre une « liste blanche » de cellules Wifi autorisées et/ou une « liste noire » de cellules Wifi interdites et la station de base(110) est en outre configurée pour effectuer la diffusion de la « liste blanche » et/ou de la « liste noire ».

17. Equipement d'utilisateur (125) destiné à gérer une resélection de cellule, dans lequel l'équipement d'utilisateur (125) est configuré pour effectuer la réception d'informations de système diffusées à partir d'une station de base (110) comprise dans un système cellulaire (100), lesdites informations de système étant relatives à une resélection de mode de veille comprenant une resélection de mode de veille pour une ou plusieurs cellules Wifi (115) et une ou plusieurs cellules (105) du système cellulaire (100), et l'équipement d'utilisateur (125) est outre configuré pour effectuer l'exécution d'une resélection de cellule sur la base des informations de système reçues, **caractérisé en ce que** les informations de système comprennent un temps de déclenchement de resélection.

18. Equipement d'utilisateur (125) selon la revendication 17, dans lequel les informations de système comprennent un ou plusieurs de :
une liste de porteuses Wifi, et
un ou plusieurs seuils de resélection.

19. Equipement d'utilisateur (125) selon l'une quelconque des revendications 17 et 18, dans lequel l'équipement d'utilisateur (125) est configuré pour effectuer la réception des informations de système périodiquement et/ou en réponse au fait qu'une qualité de connexion Wifi d'un réseau Wifi auquel l'équipement d'utilisateur (125) est connecté a diminué au-dessous d'un certain seuil.

20. Equipement d'utilisateur (125) selon l'une quelconque des revendications 17 à 19, dans lequel l'équipement d'utilisateur (125) est en outre configuré pour effectuer la réception d'informations de charge de l'une ou plusieurs cellules Wifi, lesdites informations de charge étant diffusées à partir de la station de base (110) et/ou à partir d'un point d'accès, AP, Wifi (120), dans lequel l'équipement d'utilisateur (125) pour la resélection de cellule est configuré pour tenir compte des informations de charge reçues.

21. Equipement d'utilisateur (125) selon l'une quelconque des revendications 17 à 20, dans lequel l'équipement d'utilisateur (125) est en outre configuré pour effectuer la réception d'une « liste blanche » comprenant des cellules Wifi autorisées et/ou une « liste noire » comprenant des cellules Wifi interdites, la « liste blanche » et/ou la « liste noire » étant diffusées par le système cellulaire (100), dans lequel l'équipement d'utilisateur (125) est en outre configuré pour effectuer la resélection de cellule sur la base de la « liste blanche » et/ou la « liste noire » reçues.
